# DEMANDE DE BREVET EUROPEEN

(11) **EP 1 519 608 A1**
(43) Date de publication de la demande: **30.03.2005**
(21) Numéro de dépôt: 04020262.4
(22) Date de dépôt: 26.08.2004
(51) Int. Cl.: H04Q 7/38

(54) **Procédé et système de localisation d'un terminal mobile**

(30) Priorité: 25.09.2003 FR 0311237
(71) Demandeur: Nortel Networks Limited, St. Laurent, Quebec H4S 2A9 (CA)
(72) Inventeur: Choukroun, David, 78150 Le Chesnay (FR); Boumendil, Sarah, 75016 Paris (FR)
(74) Mandataire: Ameline, Jean-Paul

(57) **Abrégé**

Le procédé permet de localiser un terminal radio (14') apte à communiquer avec une pluralité de stations de base radio (13,13a,13b) associées à des cellules respectives sous la supervision d'au moins un contrôleur de réseau radio (12) recevant des données destinées à la localisation du terminal, au moins une des cellules comprenant des portions de cellule prédéfinies (201b-205b). La station de base associée à cette cellule comprend des moyens pour estimer une portion de cellule où se trouve le terminal radio et pour focaliser des signaux de communications avec le terminal radio sélectivement dans ladite portion de cellule radio estimée. Le procédé comprend des étapes de transmission d'au moins un paramètre destiné à la localisation du terminal (14') et relatif à la portion de cellule estimée de la station de base (13b) associée à ladite cellule au contrôleur de réseau radio (12), et de localisation du terminal radio en fonction d'au moins ledit paramètre relatif à la portion de cellule estimée.

## Description

La présente invention concerne le domaine des radio-communications avec des terminaux mobiles et plus particulièrement le domaine de la localisation des terminaux mobiles.

L'invention s'applique notamment, mais non exclusivement, aux systèmes cellulaires de troisième génération de type UMTS ("Universal Mobile Telecommunications Systems").

La fonction de localisation des terminaux mobiles d'un système de radio-communication s'utilise au niveau applicatif du modèle de référence OSI et fait appel aux couches inférieures du même modèle, notamment la couche 1 (Lien Physique). Elle consiste en l'estimation de la position géographique d'un terminal mobile donné, en particulier à partir des signaux qu'il échange sur l'interface air avec l'infrastructure de radio-communication.

L'infrastructure d'un réseau de radiocommunication comprend des stations de base distribuées sur le territoire de couverture pour communiquer avec des terminaux mobiles situées dans les zones ou cellules radio, qu'elles desservent.

Dans un système de troisième génération tel que l'UMTS, la communication entre une ou plusieurs de ces stations de bases et un terminal mobile s'effectue sous la supervision d'au moins un contrôleur de réseau radio (RNC) desservant le terminal, dit « serving RNC » ou SNRC. Le SRNC peut coopérer avec d'autres RNC pour ce faire. Des échanges peuvent en outre avoir lieu entre un RNC et le terminal mobile, ou un RNC et une station de base.

Le RNC reçoit diverses données en provenance du réseau, notamment des stations de base, et du terminal. Ces données incluent des mesures relatives à des signaux de transmission reçus par ces entités : mesures de puissance de signal servant aux procédures de sélection de cellule ou de handover, mesures de temps servant aux procédures de synchronisation de l'interface radio, telles que de RTT (« Round Trip Time ») effectuées par un terminal mobile ou une station de base, ou de RTD (« Real Time Difference ») effectuées par une station de base (voir spécification technique 3G TS 25.215, v3.0.0 et spécification 3GPP 45.008 V. 5.10.0, publiées respectivement en juin 2000 et avril 2003 par l'organisation 3GPP ("Third Generation Partnership Project")).

La localisation d'un terminal mobile s'effectue notamment à partir de ces données envoyées au RNC par les divers éléments du réseau, et à partir d'éléments complémentaires extérieurs de nature variée, en provenance par exemple de base de données de références géographiques ou d'autres sources d'information.

Il existe différentes stratégies de localisation dont certaines, telles que la méthode de l'identifiant de cellule (« Cell ID »), la méthode OTDOA (« Observed Time Difference Of Arrival ») ou encore la méthode de localisation par système GPS (« Global Positioning System ») sont notamment décrites dans la spécification technique 3G TS 25.305, « Stage 2 functional specification of UE positioning in UTRAN », version 3.8.0 publiée en mars 2002 par le 3GPP, ainsi que dans l'ouvrage de référence « Principes de radiocommunication de troisième génération » de M. Lucidarme, ed. Vuibert, 2002.

La précision de la localisation effectuée dépend d'un certain nombre de facteurs, parmi lesquels la méthode de localisation utilisée, la position du terminal mobile dans la zone de couverture et l'activité du terminal mobile.

En effet, les différentes stratégies de localisation précitées n'offrent pas les mêmes performances, et répondent à des besoins différents. Les méthodes basées sur l'identifiant de cellule supposent la détermination de la station de base de desserte d'un terminal mobile donné, dont la couverture géographique fournit une première approximation de la localisation de la station. Ces méthodes, avantageuses de par leur simplicité, manquent à l'évidence de précision pour certaines applications.

La méthode GPS n'est utilisable qu'avec des terminaux mobiles équipés de récepteurs capables de recevoir des signaux GPS. Sa mise en oeuvre pratique requiert par ailleurs la fourniture par l'infrastructure de réseau au terminal mobile équipé d'un récepteur GPS de données spécifiques, dites données d'assistance GPS, afin d'améliorer sensiblement les performances du récepteur GPS embarqué sur le terminal mobile.

Les méthodes de localisation de type TOA (« Time of Arrival ») ou TDOA font intervenir une mesure du temps d'arrivée des signaux reçus. La présence de multi-trajets de propagation limite la précision avec laquelle le temps d'arrivée de la première composante de signal reçu peut être estimée. Cela influe considérablement sur les performances des entités chargées de calculer la localisation des stations mobiles dans le réseau, et impose un compromis entre précision du service et temps de traitement.

En outre, les résultats de plusieurs méthodes de localisation peuvent être combinés afin d'affiner la localisation.

L'information de localisation peut être requise par diverses entités pour de multiples finalités, par exemple par le réseau lui-même ou encore par des tiers pour délivrer certains services, par le terminal mobile ou par un service d'appel d'urgence.

Une augmentation de précision dans les opérations de localisation se traduit par une augmentation des coûts associés, liée aux opérations de mesures et de calcul supplémentaires.

Certaines stations de base, notamment dans les réseaux de type UMTS, sont équipées de dispositifs d'antennes configurables, adaptés pour émettre selon différents diagrammes d'antenne. Chaque diagramme d'antenne couvre sélectivement une portion prédéfinie d'une cellule radio associée à une telle station de base. La configuration d'un tel dispositif d'antenne est réalisée en fonction de commandes qui lui sont transmises par des éléments de pilotage dans la station de base.

Ces capacités d'adaptation de telles stations de base sont notamment utilisées lorsqu'elles établissent un canal de communication avec un terminal, afin de focaliser le rayonnement des antennes -et donc la transmission de signaux sur le canal de communication- dans la portion estimée la mieux adaptée à cette transmission. Cette opération est nommée « beamforming », littéralement « mise en forme de faisceau ». Sa définition a lieu lors de l'établissement du canal de communication entre la station de base et le terminal mobile, au niveau de la couche 1 du modèle de référence OSI.

Un but de la présente invention est de permettre d'améliorer, sans mettre en oeuvre de coûteux moyens, la localisation d'un terminal radio dans un réseau de radiocommunication dont des stations de base utilisent des techniques de "beamforming".

L'invention propose ainsi, suivant un premier objet, un procédé de localisation d'un terminal radio apte à communiquer avec une pluralité de stations de base radio associées à des cellules respectives sous la supervision d'au moins un contrôleur de réseau radio recevant des données destinées à la localisation du terminal,
au moins une des cellules comprenant des portions de cellule prédéfinies, la station de base associée à ladite cellule comprenant des moyens pour estimer une portion de cellule où se trouve le terminal radio et pour focaliser des signaux de communication avec le terminal radio sélectivement dans ladite portion de cellule radio estimée.

Selon l'invention, le procédé comprend les étapes suivantes :
- transmettre de la station de base associée à ladite cellule au contrôleur de réseau radio au moins un paramètre destiné à la localisation du terminal et relatif à la portion de cellule estimée, et
- localiser le terminal radio en fonction d'au moins ledit paramètre relatif à la portion de cellule estimée.

Ce procédé permet de tirer avantageusement parti, dans les estimations de localisation réalisées au niveau applicatif du réseau, d'opérations réalisées au niveau des couches basses du réseau pour mettre en oeuvre des liens de communications radio.
Suivant un second objet, l'invention propose un système de localisation d'un terminal radio apte à communiquer avec une pluralité de stations de base radio associées à des cellules respectives sous la supervision d'au moins un contrôleur de réseau radio recevant des données destinées à la localisation du terminal, au moins une des cellules comprenant des portions de cellule prédéfinies, la station de base associée à ladite cellule comprenant des moyens pour estimer une portion de cellule où se trouve le terminal radio et pour focaliser des signaux de communications avec le terminal radio sélectivement dans ladite portion de cellule radio estimée. Selon l'invention, ce système comprend des moyens pour localiser le terminal radio en fonction d'au moins un paramètre relatif à la portion de cellule estimée, ledit paramètre étant transmis de la station de base associée à ladite cellule au contrôleur de réseau radio.

D'autres particularités et avantages de la présente invention apparaîtront dans la description ci-après d'exemples de réalisation non limitatifs, en référence aux dessins annexés, dans lesquels :
- la figure 1 est un schéma d'un réseau de type UMTS dans lequel la présente invention est mise en oeuvre ;
- La figure 2 est un diagramme montrant l'organisation en couches de protocoles de communication employés sur l'interface radio du réseau UMTS.

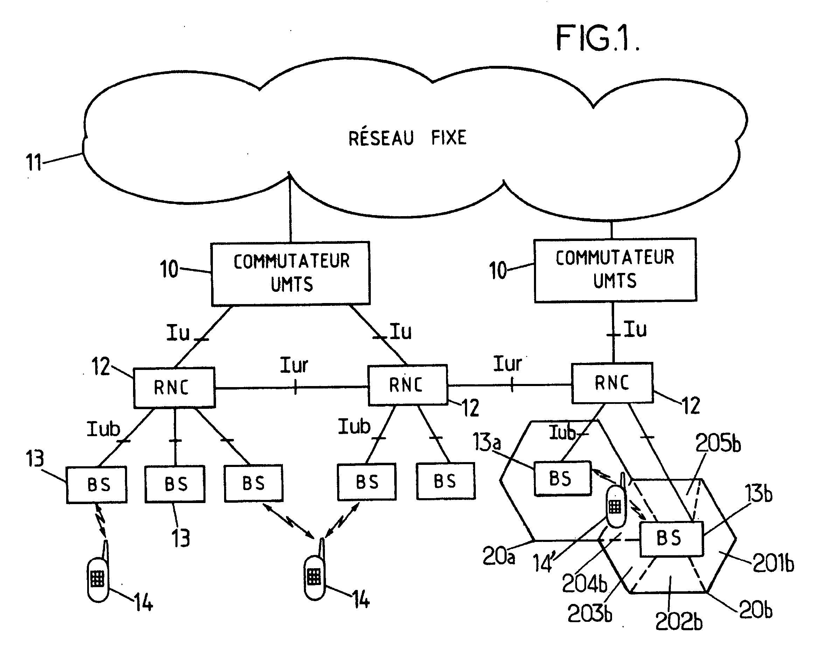

L'invention est décrite ci-après dans son application à un réseau UMTS, en référence à la figure 1.

Les commutateurs du service mobile 10, appartenant un réseau coeur (CN, "Core Network"), sont reliés d'une part à un ou plusieurs réseaux fixes 11 et d'autre part, au moyen d'une interface dite lu, à des contrôleurs de réseau radio 12, ou RNC ("Radio Network Controller"). Chaque RNC 12 est relié à une ou plusieurs stations de base 13, aussi appelées "node B", au moyen d'une interface dite lub. Les stations de base 13, réparties sur le territoire de couverture du réseau, sont capables de communiquer par radio avec les terminaux mobiles 14, 14' appelés UE ("User Equipment"). Certains RNC 12 peuvent en outre communiquer entre eux au moyen d'une interface dite lur. Les RNC et les stations de base forment un réseau d'accès appelé UTRAN ("UMTS Terrestrial Radio Access Network").

Dans un réseau UMTS, des codes orthogonaux d'étalement de spectre sur une fréquence fixe sont attribués à chaque canal. A chaque station de base 13 correspond au moins une cellule, chaque cellule correspondant alors à un secteur du territoire de couverture. On distingue les liens descendants (downlink) pour les canaux de communication depuis le réseau d'accès vers les terminaux et les liens montants (uplink) pour les canaux de communication depuis les terminaux vers le réseau d'accès. Sur chaque lien descendant, un code de brouillage (scrambling) distinct permet de distinguer une cellule, un code d'étalement variable orthogonal (OVSF pour orthogonal variable spreading factor) distinct permet de distinguer chaque service dans une cellule. Sur chaque lien montant, un code de brouillage distinct permet de distinguer un mobile, un code OVSF distinct permet de distinguer chaque service au sein d'un mobile. Des ensembles différents de codes sont attribués à des cellules voisines de façon à minimiser les interférences externes entre cellules. Pour une fréquence fixe donnée, la quantité de canaux possibles, est limitée par le nombre de codes disponibles.

L'UTRAN comporte des éléments des couches 1 et 2 du modèle ISO en vue de fournir les liaisons requises sur l'interface radio (appelée Uu), et un étage 15A de contrôle des ressources radio (RRC, "Radio Resource Control") appartenant à la couche 3, ainsi qu'il est décrit dans la spécification technique 3G TS 25.301, "Radio Interface Protocol", version 3.4.0 publiée en mars 2000 par le 3GPP. Vu des couches supérieures, l'UTRAN agit simplement comme relais entre l'UE et le CN.

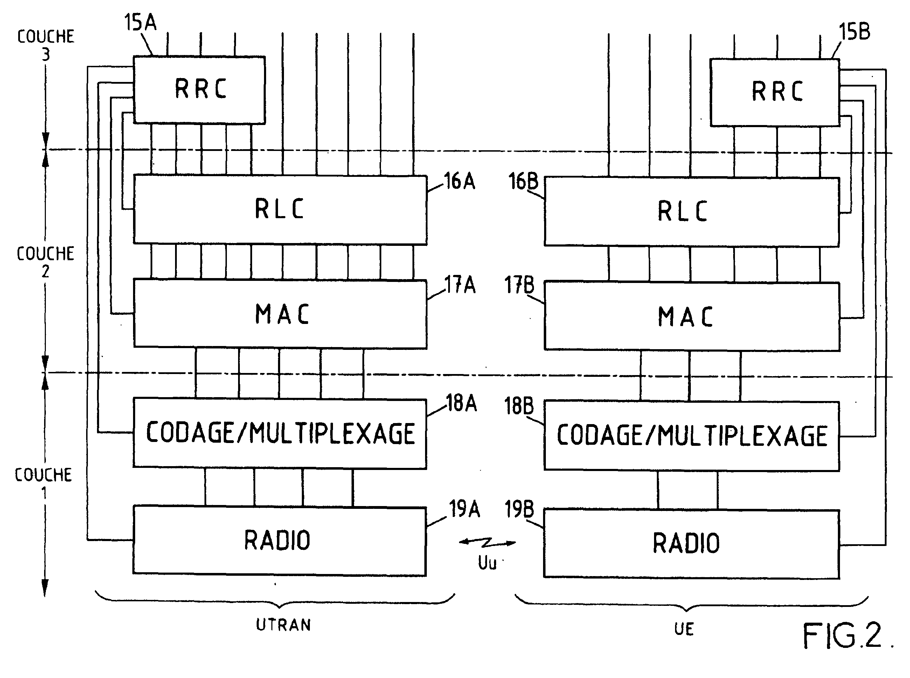

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 3.1.0 publiée en janvier 2000 par le 3GPP). Les étages RRC, RLC et MAC se trouvent dans le RNC 12. La couche 1 se trouve par exemple dans le node B 13. Une partie de cette couche peut toutefois se trouver dans le RNC 12.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station de base 13 avec laquelle l'UE est en liaison radio. Des protocoles appropriés assurent les échanges entre ces RNC sur l'interface *lur,* par exemple ATM ("Asynchronous Transfer Mode") et AAL2 ("ATM Adaptation Layer No. 2"). Ces mêmes protocoles peuvent également être employés sur l'interface *lub* pour les échanges entre un node B et son RNC.

Les couches 1 et 2 sont chacune contrôlées par la sous-couche RRC, dont les caractéristiques sont décrites dans la spécification technique TS 25.331, "RRC Protocol Specification", version 4.1.0 publiée en juin 2001 par le 3GPP. L'étage RRC 15A, 15B supervise l'interface radio. Il traite en outre des flux à transmettre à la station distante selon un "plan de contrôle", par opposition au "plan d'utilisateur" qui correspond au traitement des données d'utilisateur issues de la couche 3.

Un UE actif entretient avec son SRNC une "connexion RRC" selon laquelle il peut échanger diverses informations de signalisation. La gestion de cette connexion RRC est décrite dans la section 8.1 de la spécification TS 25.331 précitée. La section 8.3 décrit les procédures de mobilité intervenant dans le cadre de cette connexion RRC, en particulier la façon dont le RNC peut mettre à jour pour l'UE un ensemble actif de cellules avec lesquels il a un lien radio. Le "lien radio" s'entend ici comme l'association logique entre l'UE et une cellule. Un tel lien peut supporter des transmissions selon un ou plusieurs canaux physiques. Pour chaque UE avec lequel il a une connexion RRC, le RNC connaît le ou les liens radio en vigueur.

C'est au moyen de cette connexion RRC que le SNRC est capable de se faire communiquer les mesures faites par l'UE sur l'interface radio (puissances reçues, mesures de temps, ...). On pourra à cet égard se reporter à la section 8.4 de la spécification TS 25.331 (messages MEASUREMENT CONTROL et MEASUREMENT REPORT).

Il est connu d'exploiter ces mesures au RNC en vue de localiser le terminal, par exemple sur la base de l'identité de la cellule qui fournit le meilleur lien radio, éventuellement avec une information complémentaire de distance déduite des mesures de temps.

Dans certains cas, ces mesures peuvent être complétées par d'autres mesures faites par les nodes B et obtenues par le RNC au moyen des procédures du protocole NBAP mis en oeuvre sur l'interface lub ("Node B Application Protocol", voir section 8.3.1 de la spécification technique 3G TS 25.433, version 4.1.0, "UTRAN lub Interface NBAP Signalling", publiée en juin 2001 par le 3GPP),

Les stations de base 13, peuvent desservir chacune une ou plusieurs cellules au moyen d'émetteurs-récepteurs respectifs associés à des antennes respectives.

Chaque station de base 13 forme dans une cellule qu'elle dessert, un ensemble de canaux physiques descendants par la technique CDMA.

En référence à nouveau à la figure 1, seulement deux cellules radio 20a et 20b sont représentées. On représente généralement les cellules radio schématiquement sous forme hexagonale qui peut en fait varier en fonction de la typologie du terrain. De même la frontière entre zones est en réalité moins marquée que sur la figure, les zones pouvant se recouvrir de façon à passer progressivement d'une zone à l'autre.

Au sein de chaque cellule radio 20a, 20b desservie par une station de base 13, respectivement 13b, est disposée une antenne agencée pour émettre et recevoir des signaux échangés avec des terminaux mobiles situés dans la zone desservie par la station de base 13.

La station de base 13b desservant la cellule radio 20b est équipée d'un système d'antenne lui permettant de mettre en oeuvre la technique du beamforming selon 5 portions de cellules 201b, 202b, 203b, 204b et 205b.

Lors de l'établissement d'un nouveau lien, sous la supervision de son RNC 12, par la station de base desservant la cellule radio comme indiqué ci-dessus au niveau de la couche 1 du modèle OSI, la cellule radio 20b va focaliser les signaux échangés dans la portion de cellule, par exemple 204b, estimée la plus adaptée aux échanges avec un terminal 14' ciblé, à l'aide de son dispositif d'antennes configurable.

Par ailleurs, une particularité des systèmes CDMA à étalement de spectre est de pouvoir supporter un mode de macrodiversité. La macrodiversité consiste à prévoir qu'un terminal mobile puisse simultanément communiquer avec des émetteurs-récepteurs fixes distincts d'un ensemble actif ("active set"). Dans le sens descendant, le terminal mobile reçoit plusieurs fois la même information. Dans le sens montant, le signal radio émis par le terminal mobile est capté par les émetteurs-récepteurs fixes de l'ensemble actif pour former des estimations différentes ensuite combinées dans le réseau.

La macrodiversité procure un gain de réception qui améliore les performances du système grâce à la combinaison d'observations différentes d'une même information.

Elle permet également de réaliser des transferts intercellulaires en douceur (soft HO, "soft handover") , lorsque le terminal mobile se déplace.

Lorsqu'un terminal est à la frontière de deux (ou plus) cellules radio et est en état de réaliser un « soft handover » d'une cellule à une autre, il dispose des codes nécessaires pour écouter plusieurs stations de base, chaque station de base disposant des codes pour écouter le terminal. Le RNC gère au moyen de techniques connues, les liens descendants vers le terminal et les liens montants en provenance du terminal de façon à assurer une continuité de communication au passage d'une zone à l'autre.

Il existe un mécanisme similaire, appelé passage plus souple (softer HO, "softer handover »), lorsque le passage se fait entre deux cellules associées à une même station de base dans le cas d'une antenne multisectorielle, chaque cellule correspondant alors à un secteur de l'antenne.

Typiquement la localisation d'un terminal radio dans un réseau de type UMTS comprend deux principales étapes : tout d'abord la réalisation de mesures de signaux relatives au terminal, par exemple le terminal 14', que l'on cherche à localiser, puis un calcul d'une estimation de position du terminal sur la base de ces mesures.

Dans la méthode de localisation basée sur l'identifiant de cellule, la localisation est effectuée à partir de la détermination de l'identification de la cellule fournissant une couverture radio au terminal que l'on cherche à localiser (voir la Spécification Technique 3GPP TS 25.305 version 3.8.- Universal Mobile Telecommunications System (UMTS); Stage 2 functional specification of UE positioning in UTRAN §8). Ainsi quand une demande de localisation est faite, le RNC vérifie tout d'abord l'état du terminal. Si le terminal est dans un état dans lequel l'identifiant de cellule est disponible (par exemple celui fournissant une connexion active au terminal), cet identifiant est choisi comme une base pour l'estimation du positionnement. Lorsque l'identifiant de cellule n'est pas disponible, le RNC fait établir un échange avec le terminal de façon à établir la cellule dans laquelle il se trouve.

Lorsque le terminal est en mode soft HO, la localisation par la méthode de l'identifiant de cellule s'effectue en fonction des informations relatives à toutes les cellules associées au terminal en mode soft HO, se trouvant dans l'ensemble actif. De la même façon l'identifiant de chaque cellule est déterminé, puis un identifiant de cellule de référence est sélectionné en fonction d'un ou plusieurs paramètres ou principes décrit au §8.1.2.2. de la spécification technique citée ci-dessus, parmi lesquels:
- qualité des liens établis dans les cellules respectives (par ex, l'identifiant de cellule avec la qualité la meilleure est sélectionné comme identifiant de référence) ;
- l'identifiant sélectionné est celui de la cellule la plus récemment introduite dans l'ensemble actif du terminal ;
- l'identifiant sélectionné est celui de la cellule fournissant une connexion active au moment de la demande de localisation.

Le principe de détermination de l'identifiant de cellules est similaire pour le cas du mode softer HO.

Cette identification est faite sur la base de données envoyées par les stations de base de l'ensemble actif au RNC.

Pour accroître la précision de la localisation, la procédure de localisation peut également demander que des mesures supplémentaires, en-dehors de celles demandées d'office pour la méthode de localisation retenue, soient réalisées par la station de base desservant la cellule identifiée et envoyées au RNC ou encore par le terminal lui-même : mesures de RTT, de puissances de signaux et de niveau de signaux.

La détermination de la localisation par la méthode de l'identifiant de la cellule ou par toute autre méthode est faite sur la base de données envoyées par la station de base 13b à son RNC 12 sur demande de ce dernier, via la liaison *lub,* généralement remontées dans les messages « Measurements Report ». Ces données sont par exemple du type définies dans la spécification Technique 3GPP TS 25.215 version 5.4.0 (UMTS; Physical Layer; Measurements (FDD) telles que des mesures de puissances et de niveau de signal par cellule : la puissance de bande totale reçue (« Received total wide band power »), ou la puissance de porteuse transmise (« Transmitted carrier power »), ou encore le rapport signal-sur-interféreurs (SIR, 3signal-to-Interferer Ratio »).

Une mise en oeuvre de l'invention consiste à ce que lorsqu'une station de base, par exemple la station 13b dans le cas représenté en figure 1, est équipée d'un dispositif de beamforming, elle envoie dans ses messages au RNC destinés à la localisation du terminal 14', des informations relatives à la portion de cellule estimée par la station de base 13b dans laquelle sont focalisés les signaux de communications. Ces informations peuvent être par exemple une ou plusieurs des données suivantes : identifiant de la portion de cellule 204b estimée, mesures de puissance ou de temps effectuées relativement à cette portion. Elles peuvent par exemple être relayées au RNC dans les messages « Dedicated Measurement Report » du protocole NBAP.

Ainsi au moins certaines données envoyées par une station équipée d'un dispositif de beamforming au RNC pour la localisation d'un terminal pour lequel la station de base a estimé une portion de cellule, seront relatives à la portion de cellule estimée.

Notamment, les mesures de puissance de bande totale reçue (« Received total wide band power »), de puissance de porteuse transmise (« Transmitted carrier power »), ou de rapport signal-sur-interféreurs (SIR, Signal-to-Interferer Ratio ») ou tout autre type de mesures requises par le RNC auprès d'une station de base et effectuées pour la portion de cellule estimée seront envoyées au RNC pour servir ensuite à la localisation.

Lorsque le terminal est en mode soft HO, la localisation sera ainsi effectuée à partir de l'ensemble des mesures relatives aux portions de cellules estimées respectives pour les stations de base de l'ensemble actif disposant de moyens de beamforming, et aux cellules pour les stations de base de l'ensemble actif ne disposant pas de tels moyens.

Par exemple, si le terminal 14' se trouve à la frontière entre les cellules 20a et la portion 204b, la station de base 13a enverra au RNC des données relatives à la cellule 20a, tandis que la station de base 13b enverra des données relatives à la portion de cellule 204b.

La combinaison de plusieurs méthodes de localisation selon l'art antérieur peuvent conduire à déterminer plus d'une zone de localisation pour un terminal donné. Par exemple, la combinaison d'une méthode de type TOA utilisant la mesure réalisée par une station de base du temps s'écoulant entre l'envoi d'un signal à un terminal situé dans la cellule qu'elle dessert et son retour (RTD), qui fournit un cercle comme résultat de localisation et d'une méthode de type qui fournit une hyperbole, peut conduire à disposer de deux positions possibles pour le terminal ciblé, correspondant à deux intersections entre le cercle et l'hyperbole. L'information relative à une portion de cellule pourra être utilisée dans le processus de localisation en supplément de ces deux méthodes et pourra permettre de déterminer laquelle de ces deux localisations possibles doit être retenue, pour peu que les deux intersections ne se trouvent pas dans la même portion.

Un procédé selon l'invention peut donc être mis en oeuvre dans toutes les méthodes de localisation souhaitées. Il permet d'accroître la précision de la localisation sans nécessiter de coûteux moyens.

## Revendications

1. Procédé de localisation d'un terminal radio (14') apte à communiquer avec une pluralité de stations de base radio (13a, 13b) associées à des cellules respectives (20a, 20b) sous la supervision d'au moins un contrôleur de réseau radio (12) recevant des données destinées à la localisation du terminal,
au moins une des cellules comprenant des portions de cellule prédéfinies (201 b, 202b, 230b, 204b, 205b), la station de base associée à ladite cellule comprenant des moyens pour estimer une portion de cellule où se trouve le terminal radio et pour focaliser des signaux de communications avec le terminal radio sélectivement dans ladite portion de cellule radio estimée,
**caractérisé en ce qu'**il comprend les étapes suivantes :
- transmettre de la station de base associée à ladite cellule au contrôleur de réseau radio au moins un paramètre destiné à la localisation du terminal et relatif à la portion de cellule estimée, et
- localiser le terminal radio en fonction d'au moins ledit paramètre relatif à la portion de cellule estimée.

2. Procédé de localisation selon la revendication 1, selon lequel un paramètre transmis par ladite cellule est un identifiant de ladite portion de cellule estimée.

3. Procédé de localisation selon la revendication 1 ou la revendication 2, selon lequel un paramètre transmis par ladite cellule (20b) est une valeur représentative d'une mesure de puissance de signal relative à ladite portion de cellule estimée.

4. Système de localisation d'un terminal radio (14') apte à communiquer avec une pluralité de stations de base radio (13a, 13b) associées à des cellules respectives (20a, 20b) sous la supervision d'au moins un contrôleur de réseau radio (12) recevant des données destinées à la localisation du terminal,
au moins une des cellules comprenant des portions de cellule prédéfinies (201 b, 202b, 230b, 204b, 205b), la station de base associée à ladite cellule comprenant des moyens pour estimer une portion de cellule où se trouve le terminal radio et pour focaliser des signaux de communications avec le terminal radio sélectivement dans ladite portion de cellule radio estimée,
**caractérisé en ce qu'**il comprend des moyens pour localiser le terminal radio en fonction d'au moins un paramètre relatif à la portion de cellule estimée, ledit paramètre étant transmis de la station de base associée à ladite cellule au contrôleur de réseau radio.

5. Système de localisation selon la revendication 4, selon lequel un paramètre transmis par ladite cellule est un identifiant de ladite portion de cellule estimée.

6. Système de localisation selon la revendication 4 ou la revendication 5, selon lequel un paramètre transmis par ladite cellule est une valeur représentative d'une mesure de puissance de signal relative à ladite portion de cellule estimée.
